# EUROPEAN PATENT APPLICATION

(11) **EP 3 964 683 A1**
(43) Date of publication of application: **09.03.2022**
(21) Application number: 20194417.0
(22) Date of filing: 03.09.2020
(51) Int. Cl.: E06B 9/15, E06B 9/24, E06B 9/17

(54) **SOLAR BLIND**

(71) Applicant: Solar BB Ltd, London N1 7GU (GB)
(72) Inventor: ARORA, Shivashish, Northampton (GB); WHARTON, David, London (GB)
(74) Representative: Nevett, Duncan

(57) **Abstract**

A solar blind (100) is provided. The solar blind (100) comprises a plurality of slats, the plurality of slats including a first slat (102) and a second slat (104). The solar blind (100) also comprises a solar panel (106). The solar panel (106) is coupled to the first slat (102) and extends over at least a portion of the first slat (102) and over at least a portion of the second slat (104). A method of assembling a solar blind and a kit of parts for assembling into a solar blind are also provided.

## Description

### Field of invention

The invention relates to a solar blind, a method of assembling a solar blind, and a kit of parts for assembling into a solar blind.

### Background

There is a growing interest in reducing the net energy consumption of houses, offices, and other buildings. One known way to do this is to install solar panels on the roofs of such buildings. The solar panels convert solar energy into electrical energy. This electrical energy may then be used by electrical devices in the buildings themselves, or may be stored for later use, or may be directed to a national power grid for use elsewhere. However, not all roofs are suitable for supporting solar panels, or indeed the most appropriate place for supporting a solar panel in a building. Furthermore, not all occupants of a building may have access to the roof of a building or control over the use of the roof.

As solar panel technology has progressed, it has become possible to manufacture thinner and lighter solar panels. Solar panel technology is now at the stage where it is possible to manufacture flexible, sheet-like solar panels.

It is an object of the invention of provide an improved way of providing a solar panel for use on or in a building.

### Summary of invention

The invention is defined by the appended independent claims, reference to which should now be made. Optional features are set out in the dependent claims.

According to a first aspect, there is provided a solar blind. The solar blind comprises a plurality of slats, the plurality of slats including a first slat and a second slat. The solar blind also comprises a solar panel. The solar panel is coupled to the first slat and extends over at least a portion of the first slat and over at least a portion of the second slat.

Advantageously, the solar blind is able to provide shade by blocking sunlight and simultaneously convert solar energy into electrical energy with the solar panel. Advantageously, the solar panel extends over at least a portion of the first slat and over at least a portion of the second slat. This may reduce the number of solar panels required to cover a given area, such as the area of a particular window. This may also reduce the cost to manufacture the solar blind compared with, for example, a blind having a solar panel coupled to each slat of the plurality of slats, with each solar panel extending over only one slat. This may also advantageously reduce the complexity of assembly and installation of the solar blind as there may be fewer components to assemble and fewer solar panels to electrically connect.

As used herein, the term "solar panel" may refer to a structure capable of converting solar energy into electrical energy, for example using photovoltaic cells. The term "solar panel" may also be referred to as a solar film.

The solar panel may extend over at least a portion of each of at least three, at least five, or at least ten slats of the plurality of slats. Advantageously, this may help to reduce one or more of: the number of solar panels required to cover a given area, the cost to manufacture the solar blind, and the complexity of assembly and installation of the solar blind.

Each slat of the plurality of slats may be substantially rigid. Each slat of the plurality of slats may be more rigid than the solar panel. Each slat of the plurality of slats may comprise or consist of one or more of a wood, a plastic, a metal, an alloy, and an intermetallic.

The coupling of the solar panel to the first slat may be configured such that a portion of the solar panel is unable to move relative to the first slat. In particular, the coupling of the solar panel to the first slat may be configured such that the portion of the solar panel overlying the first slat is unable to move relative to the first slat. This can ensure a fixed anchorage between the solar panel and the first slat, and consequently a fixed anchorage between the solar panel and plurality of slats.

The solar blind may be configured such that at least some of the remaining portion of the solar blind is permitted to have some movement relative to the plurality of slats. For example, the portion of the solar blind extending over the second slat may be permitted to have some movement relative to the second slat. In this way, the solar blind may have a fixed anchorage to the plurality of slats via the coupling with the first slat, yet also be permitted to have some movement with respect the plurality of slats, and in particular, any slats underlying other portions of the solar panel. This can advantageously help to keep the solar panel securely connected to the plurality of slats, whilst also giving some tolerance for movement of the solar panel with respect to the slats during use of the solar blind. This may be particularly beneficial for a solar blind comprising a plurality of slats, since such a solar blind may tend to be moved between a number of positions - such as an open position and closed position - during use. Enabling the solar panel to move relative to the plurality of slats during such use of the solar blind can therefore help the solar blind to function in a way a user of the solar blind would expect, whilst also benefiting from the provision of a solar panel on the blind.

The solar panel may be coupled to the first slat by a coupling means. The coupling means may comprise one or more of a clip, clamp, screw, bolt, snap-fit connection, adhesive, magnet, elastic band, or elastic strip of material. Advantageously, the coupling means may provide a reliable way to secure the solar panel to the first slat.

The solar blind may comprise a roller. The roller may be substantially prismatic in shape. For example, the roller may be cylindrical in shape. In some embodiments, the roller may have a generally octagonal cross sectional shape. That is, the roller may be an octagonal cylinder. The roller may be coupled to an initial slat of the plurality of slats. The initial slat may be hingedly coupled to exactly one slat of the plurality of slats. The initial slat may be the first slat of the plurality of slats. Alternatively, the initial slat may be hingedly coupled to the first slat or an intermediary slat positioned between the first slat and the initial slat.

As used herein, the term "hingedly coupled" may refer to components being coupled by a mechanism, such as a hinge, which allows relative rotation. The term "hingedly coupled" may refer to components being coupled by a mechanism, such as a hinge, which allows a limited range of relative rotation, between the components.

The solar blind may be moveable between a rolled position and an unrolled position. In the rolled position, at least two slats of the plurality of slats may be rolled around the roller. In the unrolled position, the at least two slats may extend away from the roller. In the rolled position, a number of the plurality of slats may together substantially encircle the roller. In the rolled position, a number of the plurality of slats may spiral around the roller.

In the rolled position, substantially all of the slats of the plurality of slats may be rolled around the roller. In the unrolled position, substantially all of the slats of the plurality of slats may extend away from the roller. In the rolled position, substantially all of the slats of the plurality of slats may together substantially encircle the roller. In the rolled position, substantially all of the slats of the plurality of slats may spiral around the roller.

Movement of the solar blind between the rolled position and unrolled position may be caused by rotation of the roller, such as rotation of the roller about a central axis of the roller.

In this context, the term "extend away" may refer to the at least two slats being, on average, further from the roller in the unrolled position than in the rolled position.

Advantageously, a roller may provide a convenient, user-friendly way to move the blinds.

In the rolled position, at least a section of the solar panel may be rolled around the roller. In the unrolled position, at least the section of the solar panel may extend away from the roller. In the rolled position, the section of the solar panel may substantially encircle the roller. In the rolled position, the section of the solar panel may spiral around the roller.

In the rolled position, substantially all of the solar panel may be rolled around the roller. In the unrolled position, substantially all of the solar panel may extend away from the roller. In the rolled position, the solar panel may substantially encircle the roller. In the rolled position, the solar panel may spiral around the roller.

The rolled position may correspond to an open position for the solar blind, and the unrolled position may correspond to a closed position for the solar blind.

In this context, the term "extend away" may refer to the section of the solar panel being, on average, further from the roller in the unrolled position than in the rolled position.

Unless specified otherwise, features described herein are described in relation to the solar blind in the unrolled position.

The solar blind may be a solar blackout blind. The solar blind may be suitable for fixing to, or over, a window, for example over an external surface of the window. The solar blind may be substantially weather-proof. The solar blind may consist of waterproof materials. Alternatively, any non-waterproof materials of the solar blind may be shielded from liquid external to the solar blind.

The solar blind may be configured to attach to or fit over a window such that the solar blind may cover at least part of a glass substrate of the window. The solar blind may therefore be installable onto exsiting windows of a building. Alternatively or additionally, the solar blind may be provided as part of the structure of a window. That is, the window may incorporate the solar blind in its structure. In such examples, the solar blind may be integrated into the frame structure of the window. Therefore, according to a second aspect, there is provided a window comprising the solar blind of the first aspect.

A portion of the solar panel may be configured to move relative to at least one slat of the plurality of slats other than the first slat. For example, a portion of the solar panel may be configured to move relative to the second slat. The portion of the solar panel may be configured to move relative to the slat, for example the second slat, as the solar blind is moved between the rolled position and the unrolled position. Advantageously, accommodating movement between the portion of the solar panel and the second slat, or another slat, may reduce stresses experienced by the solar panel. For example, when moving from the unrolled position to the rolled position, tensile stresses in the solar panel may be reduced or avoided. This is because, rather than portions of the solar panel stretching as the solar panel is rolled around the roller, the solar panel is configured to move relative to the slats.

The first slat may be hingedly coupled to at least one other slat of the plurality of slats. The first slat may be hingedly coupled to the second slat. The plurality of slats may be coupled together in series. Each slat of the plurality of slats may be coupled, for example hingedly coupled, to at least one adjacent slat of the plurality of slats. In some examples, the first slat is adjacent to the second slat in the series of slats.

Each slat of the plurality of slats may have a width, a height, and a depth. This is not intended to limit each slat to being a cuboid in shape. The width, height and depth may refer to a minimum width, height, and depth of a cuboid volume that each slat is able to fit within. The width of each slat may be greater than one or both of the height and depth of each slat. The height of each slat may be greater than the depth of each slat.

Any hinged coupling between two slats may refer to a hinged coupling along the widths of the two slats. Thus, the first slat may be hingedly coupled to another slat of the plurality of slats, for example the second slat, along the widths of these two slats. The widths of at least one, at least three, or at least five slats may be hingedly coupled along the widths of exactly two other slats of the plurality of slats. Advantageously, slats being hingedly coupled may provide a robust and secure coupling between slats. Further, slats being hingedly coupled may allow the slats to rotate relative to one another such that the slats can be rolled around a roller, as mentioned previously. Further still, slats being hingedly coupled may allow an overall height of the solar blind to be adjusted easily by coupling or uncoupling slats as required.

The solar panel may have a width, a height, and a depth. This is not intended to limit the solar panel to being a cuboid in shape. The width, height and depth may refer to a minimum width, height, and depth of a cuboid volume that the solar panel is able to fit within.

The direction of the width of the solar panel may correspond to the direction of the width of each slat of the plurality of slats. The direction of the height of the solar panel may correspond to the direction of the height of each slat of the plurality of slats. The direction of the depth of the solar panel may correspond to the direction of the depth of each slat of the plurality of slats.

The height of the solar panel may be greater than one or both of the width and depth of the solar panel. The width of the solar panel may be greater than the depth of the solar panel. One or both of the height and width of the solar panel may be significantly greater, for example, at least 100, at least 200, at least 500, or at least 1000 times greater, than the depth of the solar panel. Advantageously, a solar panel having a height or width significantly greater than a depth may allow the solar panel to flex, or bend, to a greater degree. Such an arrangement can also improve the ratio of the available surface area of the solar panel on the solar blind, relative to the overall volume of the solar panel.

The solar panel may have a height of greater than 0.5 metres. The solar panel may have a height of less than 5 m. The solar panel may have a width of greater than 0.1 metres. The solar panel may have a width of less than 2 metres. The solar panel may have a depth of greater than 1 millimetre. The solar panel may have a depth of less than 5 centimetres.

The solar panel may be flexible. The solar panel may be flexible such that the solar panel offers little resistance to bending around an axis extending in a direction of the width of the solar panel. The solar panel may be more flexible than each slat of the plurality of slats. The solar panel may be sufficiently flexible to roll around the roller.

The solar panel may be a thin-film solar panel (TFSP). Thin-film solar panels are typically made with one of the following four technologies: Cadmium Telluride (CdTe), Amorphous Silicon (a-Si), Copper Indium Gallium Selenide (CIGS), and Gallium Arsenide (GaAs). The solar panel may comprise one or more of CdTe, a-Si, CIGS, and GaAs.

The solar panel may comprise organic photovoltaic material. The solar panel may comprise one or more films of photovoltaic material, for example organic photovoltaic material. The film(s) may be located on a substrate. The substrate may comprise one or more of a glass, a plastic, and a metal. Each film may have a thickness of less than 100, less than 50, less than 10, less than 5, less than 1 or less than 0.1 microns. Advantageously, this may allow the solar panel to be light and flexible.

Examples of suitable solar panels include the commercially available HeliaSol ^{®} product sold by Heliatek ^{®}, the commercially available eFlex and eFilm products sold by Flisom ^{®}, and the commercially available infinityPV foil products sold by infinityPV.

The solar blind may comprise a guide arrangement. The guide arrangement may be configured to permit some limited movement of the solar panel with respect to the plurality of slats during use. The guide arrangement may include one or more of the first, second and third guides discussed in more detail below.

For example, in some embodiments, there is provided a solar blind comprising a plurality of slats connected in series and a solar panel extending over a number of these slats. A first guide extends along a first edge of the solar panel, and a second guide extends along a second edge of the solar panel, where the second edge opposes the first edge. The first guide comprises a plurality of first guide members, each first guide member being attached to a corresponding slat of the plurality of slats. The second guide comprises a plurality of second guide members, each second guide member being attached to a corresponding slat of the plurality of slats. Each first guide member extends away from the slat to which it is attached and over the first edge of the solar panel. Each second guide member extends away from the slat to which it is attached and over the second edge of the solar panel. In this manner, the first and second guides limit movement of the first and second edges of the solar panel. The guide members corresponding to the first slat are specifically configured to secure the portion of the solar panel overlying the first slat in a fixed position with respect to the first slat. In contrast, the guide members corresponding to each of the remaining slats do not secure the solar panel in a single fixed position with respect to their corresponding slats, but instead they delimit a restricted space in which the corresponding edge of the solar panel is permitted to move during use of the solar blind. This means that as the solar blind is moved during use, a portion of the solar panel is held in place relative to the first slat, whilst the rest of the solar panel is able to have some limited movement relative to the remaining slats of the solar blind. This means that the solar panel can still be kept close to the plurality of slats and held in a general orientation of intended use, whilst not interfering with or hindering the intended operation of the solar blind.

Alternative or additional features and components of possible guide arrangements are discussed below. It will be appreciated that such features and components can contribute to the benefits and functional improvements discussed in the paragraph above.

The solar blind may comprise a first guide. The first guide may be configured to limit movement of at least a portion of the solar panel. The first guide may be configured to limit movement of at least a portion of the solar panel in a direction of the depth of the solar panel. The first guide may be configured to limit movement of at least a portion of the solar panel in a direction of the width of the solar panel. The first guide may be configured to allow movement of at least a portion of the solar panel in a direction of the height of the solar panel relative to the second slat. The solar blind may be configured such that at least a portion of the solar panel moves in a direction of the height of the solar panel relative to the second slat as the solar blind is moved between the rolled position and the unrolled position. The first guide may be configured to limit movement of at least a portion of the solar panel in a direction of the one or both of the width and depth of the solar panel more than in a direction of the height of the solar panel. The first guide may be configured to limit movement of a first edge of the solar panel. The first edge may extend along a height of the solar panel.

The first guide may partially surround at least a portion of the first edge of the solar panel. At least a portion of the first edge of the solar panel may be disposed between the first guide and one or more slats underlying the solar panel. The first guide may be configured to limit movement of the solar panel relative to the first guide and the one or more underlying slats. At least a portion of the first edge of the solar panel may be configured to move relative to the first guide and the one or more underlying slats in a direction of the height of the solar panel.

As used herein, the term "edge of the solar panel" may refer to a peripheral portion of the solar panel. The peripheral portion of the solar panel may have a width of less than 10 centimetres, or a width of less than 5 centimetres. The width of the peripheral portion may be between 1 and 2 centimetres. The peripheral portion of the solar panel may comprise no photovoltaic cells.

The solar blind may comprise a second guide. The second guide may be configured to limit movement of the solar panel. The second guide may be configured to limit movement of least a portion of the solar panel in a direction of the depth of the solar panel. The second guide may be configured to limit movement of at least a portion of the solar panel in a direction of the width of the solar panel. The second guide may be configured to allow movement of at least a portion of the solar panel in a direction of the height of the solar panel. The second guide may be configured to limit movement of at least a portion of the solar panel in a direction of one or both of the width and depth of the solar panel more than in a direction of the height of the solar panel. The second guide may be configured to limit movement of a second edge of the solar panel. The second edge may extend along a height of the solar panel.

The second guide may partially surround at least a portion of the second edge of the solar panel. At least a portion of the second edge of the solar panel may be disposed between the second guide and one or more slats underlying the solar panel. The second guide may be configured to limit movement of the solar panel relative to the second guide and the one or more underlying slats. At least a portion of the second edge of the solar panel may be configured to move relative to the second guide and the one or more underlying slats in a direction of the height of the solar panel. Advantageously, the guides may limit movement of the edges of the solar panel. The guides may ensure that the solar panel does not stray too far from the second slat, or another slat, of the plurality of slats, for example in the wind. That is, the guides may retain the solar panel in close proximity to the second slat, or another slat, of the plurality of slats. This may also reduce forces exerted on any coupling means used to couple the solar panel to the first slat.

The first edge may substantially oppose the second edge. Advantageously, the first guide and the second guide may limit movement of the solar panel along opposing edges along the height of the solar panel. The first guide and the second guide may retain the solar panel in close proximity to some or all of the plurality of slats.

The first guide may comprise one or more first guide members. Each first guide member may correspond to one slat of the plurality of slats. For example, each first guide member may be affixed to a corresponding slat of the plurality of slats.

The second guide may comprise one or more second guide members. Each second guide member may correspond to one slat of the plurality of slats. For example, each second guide member may be affixed to a corresponding slat of the plurality of slats.

The first guide may comprise a first guide member corresponding to the first slat. A first portion of the first edge of the solar panel may be located between the first slat and the first guide, for example between the first slat and the first guide member corresponding to the first slat.

The second guide may comprise a second guide member corresponding to the first slat. A first portion of the second edge of the solar panel may be located between the first slat and the second guide, for example between the first slat and the second guide member corresponding to the first slat.

The first guide may comprise a first guide member corresponding to the second slat. A second portion of the first edge of the solar panel may be located between the second slat and the first guide, for example between the second slat and the first guide member corresponding to the second slat.

The second guide may comprise a second guide member corresponding to the second slat. A second portion of the second edge of the solar panel may be located between the second slat and the second guide, for example between the second slat and the second guide member corresponding to the second slat.

The first guide may extend away from one or both of the first slat and the second slat. The first guide may extend away from each slat of the plurality of slats. The first guide may extend over the solar panel, for example over the first edge of the solar panel. The first guide may extend over only the first edge of the solar panel. This can help to retain the solar panel in close proximity with the plurality of slats, whilst avoiding obscuring a large proportion of a surface of the solar panel.

The second guide may extend away from one or both of the first slat and the second slat. The second guide may extend away from each slat of the plurality of slats. The second guide may extend over the solar panel, for example over the second edge of the solar panel. The second guide may extend over only the second edge of the solar panel. This can help to retain the solar panel in close proximity with the plurality of slats, whilst avoiding obscuring a large proportion of a surface of the solar panel.

Each guide member may extend away from its corresponding slat. For example, the first guide member corresponding to the first slat may extend away from the first slat. The second guide member corresponding to the first slat may extend away from the first slat. The first guide member corresponding to the second slat may extend away from the second slat. The second guide member corresponding to the second slat may extend away from the second slat.

Each guide member may extend over the solar panel, for example over an edge of the solar panel. Each guide member may extend over only one edge of the solar panel. The first guide member corresponding to the first slat may extend over the solar panel, for example over the first edge of the solar panel. The first guide member corresponding to the first slat may extend over only the first edge of the solar panel. The second guide member corresponding to the first slat may extend over the solar panel, for example over the first edge of the solar panel. The second guide member corresponding to the first slat may extend over only the first edge of the solar panel. The first guide member corresponding to the second slat may extend over the solar panel, for example over the second edge of the solar panel. The second guide member corresponding to the first slat may extend over only the second edge of the solar panel. The second guide member corresponding to the second slat may extend over the solar panel, for example over the second edge of the solar panel. The second guide member corresponding to the second slat may extend over only the second edge of the solar panel. Advantageously, the guides or guide members extending over the solar panel may limit movement of the solar panel. This may ensure that the solar panel does not stray too far from the second slat, or another slat, of the plurality of slats, for example in the wind. That is, this may retain the solar panel in close proximity to the second slat, or another slat, of the plurality of slats. This may also reduce forces exerted on any coupling means used to couple the solar panel to the first slat. A guide member extending over only one edge of the solar panel may help to retain the solar panel in close proximity with the plurality of slats, whilst avoiding obscuring a large proportion of a surface of the solar panel.

A first wall of a guide member may extend away, for example substantially perpendicularly away, from its corresponding slat. For example, a first wall of the first guide member corresponding to the first slat may extend away from the first slat. A first wall of the second guide member corresponding to the first slat may extend away from the first slat. A first wall of the first guide member corresponding to the second slat may extend away from the second slat. A first wall of the second guide member corresponding to the second slat may extend away from the second slat.

A second wall of a guide member may extend over the solar panel, for example over the first or second edge of the solar panel. In such an arrangement, a portion of the solar panel may be disposed between a slat and the second wall of a guide member corresponding to said slat. For example, a second wall of a first guide member corresponding to the first slat may extend over the solar panel, for example over the first edge of the solar panel. A second wall of a second guide member corresponding to the first slat may extend over the solar panel, for example over the second edge of the solar panel. A second wall of a first guide member corresponding to the second slat may extend over the solar panel, for example over the first edge of the solar panel. A second wall of a second guide member corresponding to the second slat may extend over the solar panel, for example over the second edge of the solar panel. The second wall of a guide member may extend substantially parallel to its corresponding slat.

The second wall of a guide member may have a curved outer surface. The curvature of the curved outer surface may extend in a direction of the height of the solar panel. The curved outer surface may be a convex outer surface. Such a curved surface may advantageously allow the slats of the solar blind to be more tightly wound around the roller when the solar blind is in a rolled position. The curved surface of the second wall of the guide member may have a curvature substantially corresponding to the curvature of an outer surface of the slat corresponding to the guide member.

One or both of a first portion of the first edge and a first portion of the second edge of the solar panel may be fixed relative to one or both of the first guide and the second guide. One or both of a first portion of the first edge and a first portion of the second edge of the solar panel may be fixed relative to one or both of the first guide member corresponding to the first slat and the second guide member corresponding to the first slat.

One or both of a second portion of the first edge and a second portion of the second edge of the solar panel may be configured to move, for example in a direction of the height of the solar panel, relative to one or both of the first guide and the second guide or both.

One or both of a second portion of the first edge and a second portion of the second edge of the solar panel may be configured to move, for example in a direction of the height of the solar panel, relative to one or both of the first guide member corresponding to the second slat and the second guide member corresponding to the second slat, for example between the first guide member corresponding to the second slat and the second slat or between the second guide member corresponding to the second slat and the second slat. Advantageously, accommodating this movement may reduce stresses experienced by the solar panel. For example, when moving from the unrolled position to the rolled position, tensile stresses in the solar panel may be reduced or avoided. This is because, rather than portions of the solar panel stretching as the solar panel is rolled around the roller, the solar panel is configured to move relative to the guide members.

Where the solar panel comprises a guide configured to limit movement of an edge of the solar panel with respect to two or more slats underlying said edge of the solar panel, the guide may further comprise an urging means. The urging means may be configured to urge a portion of the edge of the solar panel towards a slat underlying the portion of the edge of the solar panel. For example, where a first guide is provided to limit movement of a first edge of the solar panel, the first guide may comprise an urging means configured to urge a first portion of the first edge of the solar panel towards a slat underlying the first portion of the first edge of the solar panel. Alternatively or additionally, where a second guide is provided to limit movement of a second edge of the solar panel, the second guide may comprise an urging means configured to urge a first portion of the second edge of the solar panel towards a slat underlying the first portion of the second edge of the solar panel.

At least a portion of the first guide may be substantially L-shaped. At least a portion of the second guide may be substantially L-shaped. At least a portion of a first or second guide member may be substantially L-shaped. At least a portion of each guide member may be substantially L-shaped. For example, one or both of the first and second guide members corresponding to the first slat may be substantially L-shaped. Alternatively, or in addition, one or both of the first and second guide members corresponding to the second slat may be substantially L-shaped.

One or both of the first guide and the second guide may comprise an urging means. One or more guide members may comprise an urging means. For example, the first guide member corresponding to the first slat may comprise an urging means. The second guide member corresponding to the first slat may comprise an urging means. The first guide member corresponding to the second slat may comprise an urging means. The second guide member corresponding to the second slat may comprise an urging means.

The or each urging means may comprise one or more of a spring, a foam, a sponge, an inflated or inflatable member, and an elastically deformable component.

An urging means of the first guide or the second guide, or an urging means of a guide member corresponding to the first slat, may be configured to urge a first portion of the solar panel towards the first slat. An urging means of the first guide member corresponding to the first slat or an urging means of the second guide member corresponding to the first slat may be configured to urge a first portion of the solar panel towards the first slat. An urging means of the first guide, or an urging means of a first guide member corresponding to the first slat, may be configured to urge a first portion of the first edge of the solar panel towards the first slat. An urging means of the second guide, or an urging means of a second guide member corresponding to the first slat, may be configured to urge a first portion of the second edge of the solar panel towards the first slat. Such an urging means may resist movement of the second portion of the solar panel. The urging means may be compressed or deflected from its lowest energy state such that a restoring force urges the first portion of the solar panel towards the first slat. The restoring force may act to move the urging means towards its lowest energy state. For example, where the urging means comprises a spring, the spring may be compressed from its natural length such that the compressive force in the spring, acting to return the spring to its natural length, urges the first portion of the solar panel towards the first slat.

An urging means of the first guide or the second guide, or an urging means of a guide member corresponding to the second slat, may be configured to urge a second portion of the solar panel towards the second slat. An urging means of the first guide member corresponding to the second slat or an urging means of the second guide member corresponding to the second slat may be configured to urge a second portion of the solar panel towards the second slat. An urging means of the first guide, or an urging means of a first guide member corresponding to the second slat, may be configured to urge a second portion of the first edge of the solar panel towards the second slat. An urging means of the second guide, or an urging means of a second guide member corresponding to the second slat, may be configured to urge a second portion of the second edge of the solar panel towards the first slat. Such an urging means may resist movement of the second portion of the solar panel. However, such an urging means may allow some movement of the second portion of the solar panel. For example, the second portion of the solar panel may be allowed to slide, or otherwise move, relative to the second slat, for example in a direction of the height of the solar panel. The urging means may be compressed or deflected from its lowest energy state such that a restoring force urges the second portion of the solar panel towards the second slat. The restoring force may act to move the urging means towards its lowest energy state. For example, where the urging means comprises a spring, the spring may be compressed from its natural length such that the compressive force in the spring, acting to return the spring to its natural length, urges the second portion of the solar panel towards the second slat.

Advantageously, the urging means may couple, or may aid the coupling of, the solar panel to the first slat. The urging means may also advantageously resist movement of the solar panel. For example, where the coupling means comprises an adhesive provided between the solar panel and the first slat, the urging means may aid the continued effect of the adhesive. In particular, the urging means may help to prevent any pulling force applied to the adhered portion of the solar panel from placing a strain on the adhesive. The pulling force may originate from the weight of the remaining portion of the solar panel, particularly when the solar blind is in an unrolled position. As another example, the pulling force may originate from wind gusts if the solar blind is used externally.

One or both of the first guide and the second guide may be attachable to, and detachable from, one or more of the plurality of slats. The attachment may be achieved via one or more of a snap-fit connection, a clip, and male and female members configured to engage with, and disengage from, each other.

One or each of the first guide members may be attachable to, and detachable from, its corresponding slat, for example via a first guide member attachment means. The first guide member attachment means may comprise one or more of a snap-fit connection, a clip, or male and female members configured to engage with, and disengage from, each other. For example, the first guide member corresponding to the first slat may be attachable to, and detachable from, the first slat via the first guide member attachment means. The first guide member corresponding to the second slat may be attachable to, and detachable from, the second slat via the first guide member attachment means.

One or each of the second guide members may be attachable to, and detachable from, its corresponding slat, for example via a second guide member attachment means. The second guide member attachment means may comprise one or more of a snap-fit connection, a clip, or male and female members configured to engage with, and disengage from, each other. For example, the second guide member corresponding to the first slat may be attachable to, and detachable from, the first slat via the second guide member attachment means. The second guide member corresponding to the second slat may be attachable to, and detachable from, the second slat via the second guide member attachment means.

Advantageously, this may simplify installation of the solar blind. This may be because the solar panel may be positioned over the slats before the guides or guide members are attached to the slat or slats. Furthermore, this may advantageously allow the solar blind to be manufactured from an existing blind or existing blind design, with the guides and solar panels being attached to the existing blind or existing blind design. This may advantageously simply manufacture. This may also advantageously allow the solar blind to be created by retrofitting solar panels to existing blinds on existing buildings.

The first guide may define a space for accommodating wiring for the solar panel. The second guide may define a space for accommodating wiring for the solar panel. The first guide member corresponding to the first slat may define a space for accommodating wiring for the solar panel. The first guide member corresponding to the second slat may define a space for accommodating wiring for the solar panel. A plurality of first guide members may each define a space for accommodating wiring for the solar panel. The spaces defined by each first guide member may align to define a passage for accommodating wiring for the solar panel. The passage may extend along the height of the solar panel. Advantageously, the guides or guide members may protect the wiring. In addition, the guides or guide members may house the wiring and may prevent the wiring from becoming tangled with the solar panel or the slats. Therefore, in some examples, the solar blind comprises wiring for the solar panel, the wiring being located in the space defined by one or both of the first guide and the second guide. By locating wiring in the space defined by one or both of the first guide and the second guide the wiring may advantageously be hidden from view.

The wiring for the solar panel may electrically connect the solar panel to an electrical energy storage unit for storing electrical energy from the solar panel. Advantageously, this may allow storage of electrical energy from the solar panel for use later. The solar blind may comprise the electrical energy storage unit. The electrical energy storage unit may be provided as a separate component to the solar blind. The solar blind may comprise an interface for connecting the solar blind to a mains power network. The solar blind may be configured to transfer electrical energy generated by the solar panel to the mains power network. This may allow a user or owner of the solar blind to sell electrical energy generated by the solar blind. This may be advantageous if the user or owner of the solar blind does not need all of the electrical energy generated by the solar blind.

The solar blind may comprise a means for manually moving the solar blind between the rolled and unrolled position. The means may be coupled to the roller. Movement of the means for manually moving the solar blind may result in movement, for example rotation, of the roller. The means may comprise one or more of a pull mechanism, a rotary or crank mechanism, and a lever mechanism. In a pull mechanism, a user may pull a pull-cord, or a tab coupled to the solar panel or a slat or other component of the solar blind, or other pull-component, to move the solar blind between the rolled and unrolled position. In a crank mechanism, a user may rotate a component, such as a crank handle, to move the solar blind between the rolled and unrolled position. In a lever mechanism, a user may operate a lever to move the solar blind between the rolled and unrolled position.

The solar blind may comprise a motor. The motor may be coupled to the roller. The motor may be configured to move, for example rotate, the roller. The motor may be configured to move the solar blind between the rolled position and the unrolled position, for example by rotating the roller.

The wiring for the solar panel may electrically connect the solar panel to the motor. Electrical energy from the solar panel may at least partially power the motor. Alternatively or additionally, the motor may be configured to receive electrical energy from another power supply, such as a mains power supply. Advantageously, where the solar blind comprises both a means for manually moving the solar blind between the rolled and unrolled position, and a motor for moving the solar blind between the rolled and unrolled position, a user may be able to choose whether to move the blind manually or use the motor.

As mentioned above, the solar panel is coupled to the first slat. The coupling may be achieved by directly attaching the solar panel to the first slat. For example, the solar panel may be directly attached to the first slat using one or more of a clip, clamp, screw, bolt, snap-fit connection, adhesive, magnet, elastic band, or elastic strip of material. Advantageously, this may reliably secure the solar panel to the first slat.

The solar blind may comprise a casing. The casing may be configured to limit movement of the solar panel, for example at least a portion of a third edge of the solar panel. The third edge of the solar panel may extend along a width of the solar panel. The third edge of the solar panel may be substantially perpendicular to the first edge of the solar panel. The third edge of the solar panel may be substantially perpendicular to the second edge of the solar panel. The third edge of the solar panel may extend between the first edge of the solar panel and the second edge of the solar panel. The casing may be configured to limit movement of a portion of the first edge of the solar panel. The casing may be configured to limit movement of a portion of the second edge of the solar panel.

The casing may be coupled, for example hingedly coupled, to a slat of the plurality of slats, such as to a final slat of the plurality of slats. The final slat may be coupled to exactly one other slat of the plurality of slats. The final slat may be further from the first slat than any other slat of the plurality of slats. Advantageously, the casing may limit movement of the solar panel. The casing may retain the solar panel in close proximity to the final slat. Advantageously, this may reduce forces exerted on any coupling means used to couple the solar panel to the first slat.

The casing may be shaped, at least in part, like an open-top box. A portion of the solar panel, for example at least a portion of the third edge of the solar panel, may be located in an interior volume defined by the casing. The walls of the casing may limit the movement of the solar panel, for example at least a portion of the third edge of the solar panel.

The casing may comprise a base. The casing may comprise one or more side walls. The one or more side walls may extend from the base, for example substantially perpendicularly from the base. The one or more side walls may extend over at least a portion of the first edge of the solar panel. The one or more side walls may extend over at least a portion of the second edge of the solar panel. The one or more side walls may extend over at least a portion of the third edge of the solar panel.

The casing may comprise a back wall. The back wall may be one of the aforementioned one or more side walls of the casing. The casing may comprise a casing component. The casing component may be attachable to the back wall. The casing component may be detachable from the back wall. The casing may be formed by attaching the casing component to the back wall. The back wall may be identical to a slat of the plurality of slats. Advantageously, this may mean that a slat may serve as the casing by attaching the casing component to that slat.

The back wall may be coupled, for example hingedly coupled, to a slat of the plurality of slats, such as to the final slat of the plurality of slats. The casing component may comprise the aforementioned base. The casing component may comprise a front wall and two side walls. The aforementioned one or more side walls may comprise the front wall and two side walls. When the casing component is attached to the back wall, the front wall of the casing component may oppose the back wall and the two side walls may extend between the back wall and the front wall.

A surface of the casing, for example a surface of the base of the casing, may be arranged to provide a support surface for the third edge of the solar panel when the solar blind is in the unrolled position. This surface may bear at least some of the weight of the solar panel when the solar blind is in the unrolled position. Advantageously, this may reduce forces exerted on any coupling means used to couple the solar panel to the first slat.

The casing may comprise one or more drainage holes. Each drainage hole may be located in the base of the casing. Each drainage hole may be a slot or aperture in the casing.

In use, liquid such as rain water may run down the solar panel, for example under the action of gravity, and into the casing. This liquid may then exit the casing through the one or more drainage holes. Advantageously, the one or more drainage holes may reduce or prevent liquid collecting in the casing.

The solar blind may comprise a wiper for wiping a surface of the solar panel. The wiper may comprise an absorbent material such as a sponge, textile, or fabric material. The wiper may comprise a non-absorbent material such as a rubber or polymer material. Advantageously, the wiper may remove dirt, debris and/or moisture from the surface of the solar panel. This may increase an efficiency of the solar panel's conversion of solar energy to electrical energy per unit area of the solar panel.

The wiper may be configured to wipe a surface of the solar panel as the solar blind is moved between the rolled position and the unrolled position. Advantageously, this may mean that the solar panel is frequently cleaned without requiring additional effort from a user beyond frequent use of the solar blind.

The solar blind may comprise a base unit. The base unit may at least partially surround the roller. The base unit may be shaped substantially like an open-top box. The roller may be located in the base unit. When the solar blind is in the rolled position, the first slat and the second slat may be located in the base unit. When the solar blind is in the rolled position, at least three, at least five or at least ten slats of the plurality of slate may be at located in the base unit.

The wiper may be located on a wall of the base unit. The wiper may be located on an internal surface of the wall of the base unit. As the solar blind is moved from the unrolled position to the rolled position, the solar panel may pass the wiper, for example between the wiper and the roller. Thus, as the solar blind is moved from the unrolled position to the rolled position, the wiper may wipe the solar panel.

The solar blind may comprise a stopper configured to stop the solar blind from moving beyond the rolled position, when the solar blind moves from the unrolled position to the rolled position. The stopper can advantageously prevent the solar blind from becoming jammed or otherwise stuck. The stopper may comprise one or more protrusions extending from an outer surface of the casing. The one or more protrusions may extend from the outer surface front wall of the casing. The stopper may be configured to engage with a surface or component of the base unit when the solar blind reaches the rolled position to prevent the solar blind from being rolled beyond the rolled position.

The solar blind may be moveable between a non-tilted orientation and a tilted orientation. The solar blind may be moveable between the non-tilted orientation and the tilted orientation whilst the solar blind is in the unrolled position. In the tilted orientation, the solar panel may be tilted towards the sun. Movement between the non-tilted orientation and the tilted orientation may comprise changing an angle between the roller and the solar panel. This may be achieved by moving a slat of the plurality of slats such as the final slat, or the casing, for example in a direction of the depth of the slat or casing. As the slat is moved, the angle between the roller and the solar panel may change. The slat may be moved using an extendable rod, or a rotator, or another means. Where the solar blind is externally fixed to or over a window, the extendable rod, rotator or other means may be used to increase a distance between a slat such as the final slat and the window. For example, a first end of the extendable rod may be coupled to a rear surface of a slat such as the final slat or the casing, and a second end of the extendable rod may be coupled to the window or other structure fixed relative to the window. Then, extending the extendable rod may increase a distance between the slat or casing and the window. This increase in distance may move the solar blind to the tilted orientation. Advantageously, in the tilted orientation, the solar panel may have an increased efficiency of conversion of solar energy to electrical energy per unit area of the solar panel.

The solar blind may comprise a plurality of solar panels. A second solar panel may be located adjacent to the solar panel. The second solar panel may be coupled to the first slat. The second solar panel may extend over the first slat and the second slat. Features described in relation to the solar panel may be applicable to the second solar panel. A guide, for example the second guide, or a number of guide members, for example the second guide members, may interact with the second edge or second portion of the solar panel in a similar manner to with a first edge or first portion of the second solar panel. Thus, the second guide, or second guide members, may limit movement of the first edge of the second solar panel as well as limit movement of the second edge of the solar panel.

In industry, it may be preferable to obtain a supply of solar panels having a particular dimension or particular dimensions, such as one or both of a particular width and a particular height. This may be because the solar panels are supplied in standardised sizes. However, windows and areas to be covered by solar blinds do not have standardised sizes. The dimensions of such windows and areas can vary significantly. Advantageously, a solar blind according to the present disclosure may allow easy coupling of solar panels of standardised sizes to a first slat of the solar blind. For example, the solar blind may comprise two side-by-side solar panels. This may allow the solar blind to have a greater solar panel area compared with a solar blind having a single solar panel of a standardised size.

According to a third aspect, there is provided a kit of parts for assembling into a solar blind. The kit comprises a plurality of slats, the plurality of slats including a first slat and a second slat, a solar panel, and a coupling means. The coupling means is for coupling the solar panel to the first slat such that the solar panel extends over at least a portion of the first slat and over at least a portion of the second slat.

The kit of parts may be a kit of parts for assembling into a solar blind according to the first aspect. Thus, any features described in relation to the first aspect may be applicable to the second aspect.

Thus, the kit of parts may comprise any one of, or any combination of, or all of, the roller, the first guide, the second guide, the first guide members, the second guide members, the means for manually moving the solar blind, the motor, the casing, the wiper and the base unit described in relation to the first aspect.

The solar blind may comprise a slip ring for electrically coupling a first portion of wiring for the solar panel to a second portion of wiring for the solar panel. The first portion of wiring may be a portion which rotates when the solar blind moves between the rolled position and the unrolled position. The first portion of wiring may be a portion which remains stationary when the solar blind moves between the rolled position and the unrolled position. The slip ring may therefore advantageously allow the solar blind to be rolled and unrolled without leading to twisting of wiring for the solar panel. The slip ring may be disposed within the roller or positioned adjacent to one end of the roller.

A slip ring is an electromechanical device that allows the transmission of electrical power and electrical signals from a stationary structure to a rotating structure. The slip ring may comprise one or more stationary contact brushes configured to rub an outer surface of a rotating electrically conductive ring. As the electrically conductive ring rotates, electric current or signal may be pass from the one or more stationary brushes to the rotating electrically conductive ring to maintain a continuous electrical connection between the two structures. Such an arrangement may therefore permit electrical energy to be transferred from the solar panel to an external power network or power storage unit without risk of undesirable twisting of wiring for the solar panel.

According to a third aspect, there is provided a method of assembling a solar blind. The method comprises providing a plurality of slats, the plurality of slats including a first slat and a second slat, and coupling a solar panel to the first slat such that the solar panel extends over at least a portion of the first slat and over at least a portion of the second slat.

The method may be a method of assembling a solar blind according to the first aspect. Thus, any features described in relation to the first aspect may be applicable to the third aspect.

The method may comprise locating the solar panel in a guided position.

The method may comprise locating the third edge of the solar panel in the casing. For example, the step of locating the solar panel in the guided position may comprise locating the third edge of the solar panel in the casing.

The method may comprise attaching one or both of the first guide and the second guide to their respective attachment points on the solar blind. For example, locating the solar panel in the guided position may comprise attaching one or both of the first guide and the second guide to their respective attachment points on the solar blind. This may occur after locating the third edge of the solar panel in the casing.

The method may comprise attaching one or more first guide members to their respective slats of the plurality of slats. For example, the method may comprise one or both of attaching the first guide member corresponding to the first slat to the first slat and attaching the first guide member corresponding to the second slat to the second slat. Locating the solar panel in the guided position may comprise attaching one or more first guide members to their respective slats of the plurality of slats. For example, locating the solar panel in the guided position may comprise one or both of attaching the first guide member corresponding to the first slat to the first slat and attaching the first guide member corresponding to the second slat to the second slat. This may occur after locating the third edge of the solar panel in the casing.

The method may comprise attaching one or more second guide members to their respective slats of the plurality of slats. For example, the method may comprise one or both of attaching the second guide member corresponding to the first slat to the first slat and attaching the second guide member corresponding to the second slat to the second slat. Locating the solar panel in the guided position may comprise attaching one or more second guide members to their respective slats of the plurality of slats. For example, locating the solar panel in the guided position may comprise one or both of attaching the second guide member corresponding to the first slat to the first slat and attaching the second guide member corresponding to the second slat to the second slat. This may occur after locating the third edge of the solar panel in the casing.

The method may comprise locating the solar panel in the guided position before coupling the solar panel to the first slat.

Coupling the solar panel to the first slat may comprise directly attaching the solar panel to the first slat, for example adhering the solar panel to the first slat.

In the guided position, one or more of the first guide members may be configured to limit movement of the solar panel, for example as described with reference to the first aspect. In the guided position, one or both of the first guide member corresponding to the first slat and the first guide member corresponding to the second slat may be configured to limit movement of the solar panel, for example as described with reference to the first aspect.

In the guided position, one or more of the second guide members may be configured to limit movement of the solar panel, for example as described with reference to the first aspect. In the guided position, one or both of the second guide member corresponding to the first slat and the second guide member corresponding to the second slat may be configured to limit movement of the solar panel, for example as described with reference to the first aspect.

The invention is defined in the claims. However, below there is provided a non-exhaustive list of non-limiting, numbered clauses which may illustrate examples of the invention. Any one or more of the features of these clauses may be combined with any one or more features of another clause, or another example, embodiment, or aspect described herein.
1. A solar blind comprising:
   a plurality of slats, the plurality of slats including a first slat and a second slat; and
   a solar panel, the solar panel being coupled to the first slat and extending over at least a portion of the first slat and over at least a portion of the second slat.
2. A solar blind according to clause 1, the solar blind comprising a roller and being moveable between a rolled position, in which at least two slats of the plurality of slats are rolled around the roller, and an unrolled position, in which the at least two slats of the plurality of slats extend away from the roller.
3. A solar blind according to clause 2, wherein, in the rolled position, at least a section of the solar panel is rolled around the roller and, in the unrolled position, at least the section of the solar panel extends away from the roller.
4. A solar blind according to any of clauses 1 to 3, wherein the first slat is hingedly coupled to the second slat.
5. A solar blind according to any of clauses 1 to 4, the solar blind comprising a first guide configured to limit movement of a first edge of the solar panel.
6. A solar blind according to clause 5, the solar blind comprising a second guide configured to limit movement of a second edge of the solar panel.
7. A solar blind according to clause 6, wherein the first edge substantially opposes the second edge.
8. A solar blind according to any of clauses 5 to 7, wherein the first guide comprises one or more first guide members, each first guide member corresponding to a slat of the plurality of slats.
9. A solar blind according to clause 8, wherein the first guide comprises a first guide member corresponding to the first slat, and wherein a first portion of the first edge of the solar panel is located between the first slat and the first guide member corresponding to the first slat.
10. A solar blind according to clause 9, wherein the first guide member corresponding to the first slat comprises an urging means configured to urge the first portion of the solar panel towards the first slat.
11. A solar blind according to clause 9 or 10, wherein the first guide member corresponding to the first slat is attachable to, and detachable from, the first slat.
12. A solar blind according to any of clauses 8 to 11, wherein the first guide comprises a first guide member corresponding to the second slat, and wherein a second portion of the first edge of the solar panel is located between the second slat and the first guide member corresponding to the second slat.
13. A solar blind according to clause 12, wherein the second portion of the first edge of the solar panel is configured to move relative to the first guide member corresponding to the second slat between the first guide member corresponding to the second slat and the second slat.
14. A solar blind according to any of clauses 8 to 13, wherein the first guide member corresponding to the first slat extends away from the first slat and over the first edge of the solar panel.
15. A solar blind according to any of clauses 8 to 14, wherein the first guide member corresponding to the first slat defines a space for accommodating wiring for the solar panel.
16. A solar blind according to any of clauses 1 to 15, wherein the solar panel is directly attached to the first slat.
17. A solar blind according to any of clauses 1 to 16, the solar blind comprising a casing configured to limit movement of a third edge of the solar panel.
18. A solar blind according to clause 17, wherein the casing comprises one or more drainage holes.
19. A solar blind according to any of clauses 1 to 18, wherein the solar blind comprises a wiper for wiping a surface of the solar panel.
20. A solar blind according to clause 2 or 3, wherein the solar blind comprises a wiper configured to wipe a surface of the solar panel as the solar blind is moved between the rolled position and the unrolled position.
21. A solar blind according to clause 20, wherein the solar blind comprises a base unit at least partially surrounding the roller, and wherein the wiper is located on a wall of the base unit.
22. A solar blind according to any previous clause, wherein the solar blind is moveable between a non-tilted orientation and a tilted orientation.
23. A solar blind according to clause 22, when dependent on clause 2, wherein the solar blind is moveable between the non-tilted orientation and the tilted orientation whilst the solar blind is in the unrolled position.
24. A solar blind according to clause 22 or 23, when dependent on clause 2, wherein movement between the non-tilted orientation and the tilted orientation comprises changing an angle between the roller and the solar panel.
25. A solar blind according to any previous clause, when dependent on clause 2, wherein the solar blind comprises a motor configured to move the solar blind between the rolled position and the unrolled position, for example by rotating the roller.
26. A solar blind according to any previous clause, when dependent on clause 2, wherein the solar blind comprises a means for manually moving the solar blind between the rolled position and the unrolled position, for example by rotating the roller.
27. A method of assembling a solar blind, the method comprising:
   providing a plurality of slats, the plurality of slats including a first slat and a second slat; and
   coupling a solar panel to the first slat such that the solar panel extends over at least a portion of the first slat and over at least a portion of the second slat.
28. A method according to clause 27, wherein the method comprises locating the solar panel in a guided position before coupling the solar panel to the first slat, wherein, in the guided position, a first guide of the solar blind is configured to limit movement of the solar panel.
29. A kit of parts for assembling into a solar blind, the kit comprising:
   a plurality of slats, the plurality of slats including a first slat and a second slat;
   a solar panel; and
   a coupling means for coupling the solar panel to the first slat such that the solar panel extends over at least a portion of the first slat and over at least a portion of the second slat.
30. A window comprising a solar blind according to any of clauses 1 to 26.

### List of figures

Examples will now be further described with reference to the figures in which:
Figure 1A shows a side view of a first embodiment of a solar blind according to the invention in an unrolled position;
Figure 1B shows a perspective view of the first embodiment of a solar blind according to the invention;
Figure 2A shows a perspective view of a slat of the solar blind without guide members;
Figure 2B shows a close-up view of a portion of Figure 2A;
Figure 2C shows a top view of the slat of Figure 2A;
Figure 2D shows a front view of the slat of Figure 2A;
Figure 2E shows a side view of the slat of Figure 2A;
Figure 3A shows a perspective view of the first guide member corresponding to the second slat of the first embodiment of the solar blind according to the invention;
Figure 3B shows a perspective view of the second guide member corresponding to the second slat of the first embodiment of the solar blind according to the invention;
Figure 4A shows a perspective view of a slat of the solar blind with guide members;
Figure 4B shows a close-up view of a portion of the slat of Figure 4A;
Figure 4C shows a top view of the slat of Figure 4A;
Figure 4D shows a front view of the slat of Figure 4A;
Figure 4E shows a side view of the slat of Figure 4A;
Figure 5A shows a perspective view of the first guide member corresponding to the first slat of the solar blind;
Figure 5B shows a perspective view of the second guide member corresponding to the first slat of the solar blind;
Figure 6A shows a perspective view of a casing of the solar blind;
Figure 6B shows a top view of the casing of Figure 6A;
Figure 6C shows a front view of the casing of Figure 6A;
Figure 6D shows a side view of the casing of Figure 6A;
Figure 7 shows perspective view of the first embodiment of a solar blind according to the invention in a rolled position;
Figure 8A shows a perspective view of a first guide member for a second slat of a second embodiment of the solar blind according to the invention; and
Figure 8B shows a perspective view of a second guide member for a second slat of the second embodiment of the solar blind according to the invention.

### Detailed description

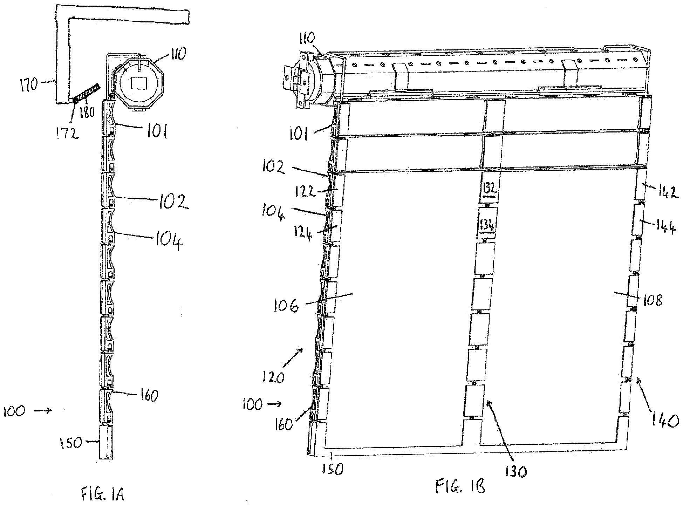

Figures 1A and 1B show a side view and a perspective view of a first embodiment of a solar blind according to the invention, respectively. The solar blind 100 comprises a plurality of slats, including a first slat 102 and a second slat 104. The slats are hingedly coupled to one another via a hook on each slat interacting with a slot on each slat. For example, as can be seen in Figure 1A, a hook of the second slat 104 interacts with a slot of the first slat 102 so as to hingedly couple the second slat 104 to the first slat 102.

The solar blind 100 comprises a first solar panel 106, the first solar panel 106 being coupled to the first slat 102 and extending over the first slat 102 and over the second slat 104. The solar blind 100 comprises a second solar panel 108, the second solar panel 108 being coupled to the first slat 102 and extending over the first slat 102 and over the second slat 104. In this embodiment, the first solar panel 106 and the second solar panel 108 are directly attached to the first slat 102 using an adhesive.

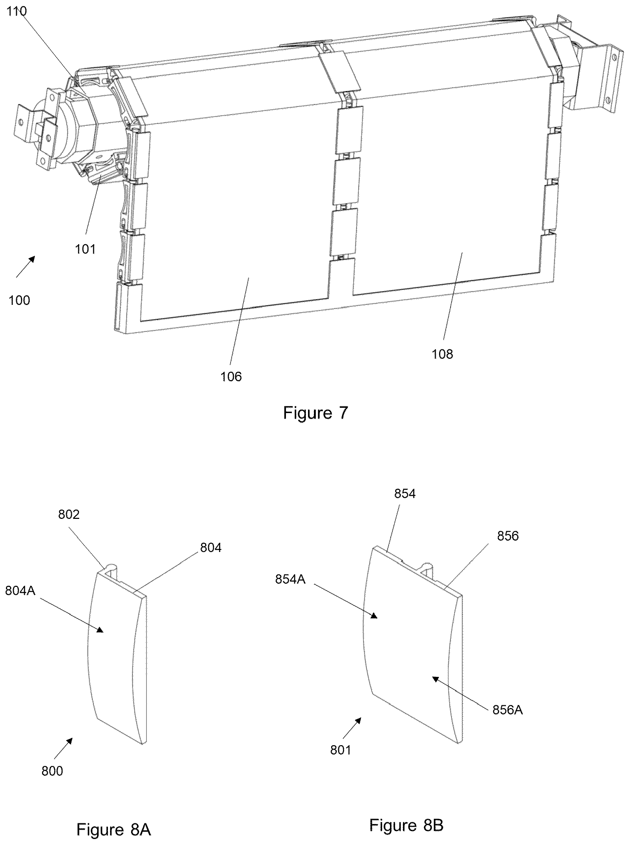

The solar blind 100 comprises a roller 110. An initial slat 101 of the plurality of slats in hingedly coupled to the roller 110. The solar blind 100 is shown in Figures 1A and 1B in an unrolled position. The solar blind 100 is moveable between this unrolled position, in which the slats and the first solar panel 106 and the second solar panel 108 extend away from the roller 110, and an unrolled position, in which the slats and the first solar panel 106 and the second solar panel 108 are rolled around the roller 110. An example of a rolled position is shown in Figure 7. In the first embodiment, the solar blind 100 comprises a motor (not shown). The motor is coupled to the roller 110 and is configured to rotate the roller 110 to move the solar blind 100 between the rolled position and the unrolled position. Referring to Figure 1A, in order to move the solar blind 100 from the unrolled position to the rolled position, the roller 110 is rotated clockwise about its central axis directed into the page.

The solar blind 100 comprises a first guide 120 configured to limit movement of a first edge of the first solar panel 106, a second guide 130 configured to limit movement of a second edge of the first solar panel 106 and a first edge of the second solar panel 108, and a third guide 140 configured to limit movement of a second edge of the second solar panel 108.

The first solar panel 106 and the second solar panel 108 have substantially rectangular cross-sections. The first and second edges of each of the first and second solar panels extend along the heights of the first and second solar panels. Thus, the first edge of each solar panel opposes the second edge of each solar panel.

The first guide 120 comprises a number first guide members, each first guide member corresponding to a slat of the plurality of slats. The first guide 120 comprises a first guide member corresponding to the first slat 122 and a first guide member corresponding to the second slat 124. A first portion of the first edge of the first solar panel 106 is located between the first slat 102 and the first guide member corresponding to the first slat 122. A second portion of the first edge of the first solar panel 106 is located between the second slat 104 and the first guide member corresponding to the second slat 124. The second portion of the first edge of the first solar panel 106 is configured to move relative to the first guide member corresponding to the second slat 124 between the first guide member corresponding to the second slat 124 and the second slat 104. This motion occurs, for example, as the solar blind 100 is moved between the rolled position and the unrolled position.

The second guide 130 comprises a number of second guide members, each second guide member corresponding to a slat of the plurality of slats. The second guide 130 comprises a second guide member corresponding to the first slat 132 and a second guide member corresponding to the second slat 134. A first portion of the second edge of the first solar panel 106 is located between the first slat 102 and the second guide member corresponding to the first slat 132. A second portion of the second edge of the first solar panel 106 is located between the second slat 104 and the second guide member corresponding to the second slat 134. A first portion of the first edge of the second solar panel 108 is located between the first slat 102 and the second guide member corresponding to the first slat 132. A second portion of the first edge of the second solar panel 108 is located between the second slat 104 and the second guide member corresponding to the second slat 134.

The second portion of the second edge of the first solar panel 106, and the second portion of the first edge of the second solar panel 108, are configured to move relative to the second guide member corresponding to the second slat 134 between the second guide member corresponding to the second slat 134 and the second slat 104. This motion occurs, for example, as the solar blind 100 is moved between the rolled position and the unrolled position.

The third guide 140 comprises a number of third guide members, each third guide member corresponding to a slat of the plurality of slats. The third guide 140 comprises a third guide member corresponding to the first slat 142 and a third guide member corresponding to the second slat 144. A first portion of the second edge of the second solar panel 108 is located between the first slat 102 and the third guide member corresponding to the first slat 142. A second portion of the second edge of the second solar panel 108 is located between the second slat 104 and the third guide member corresponding to the second slat 144. The second portion of the second edge of the second solar panel 108 is configured to move relative to the third guide member corresponding to the second slat 1244 between the third guide member corresponding to the second slat 144 and the second slat 104. This motion occurs, for example, as the solar blind 100 is moved between the rolled position and the unrolled position.

Allowing motion of the solar panel, particularly in the direction of the height of the solar panel, may mean that the solar panels are not stretched when the solar blind is moved from the unrolled position to the rolled position (like the solar panels would likely be if they were directly attached to the second slat as well as the first).

Each guide member extends away from its corresponding slat and over an edge of one or both of the first solar panel 106 and the second solar panel 108. Specifically, the first guide members extend over a first edge of the first solar panel 106, the second guide members extend over a second edge of the first solar panel 106 and over a first edge of the second solar panel 108, the third guide members extend over a second edge of the second solar panel 108.

The solar blind also comprises a casing 150. A third edge of the first solar panel 106 and a third edge of the second solar panel 108 are located in an interior volume defined by the casing. The casing 150 is configured to limit movement of the third edge of the first solar panel 106 and of the third edge of the second solar panel 108. The third edges of the first and second solar panels extend along the widths of the first and second solar panels. The third edge of each solar panel extends between the first and second edges of each solar panel. The casing 150 is also configured to limit movement of a portion of the first and second edges of each solar panel.

The casing 150 is hingedly coupled to a final slat 160 of the plurality of slats. The final slat 160 is coupled to exactly one other slat of the plurality of slats. When the solar blind 100 is in the unrolled position, the final slat 160 is further from the first slat 102 than any other slat of the plurality of slats.

The solar blind 100 also comprises a base unit 170 and a wiper 180 for wiping a surface of each of the first and second solar panels. The base unit 170 and the wiper 180 are shown in Figure 1A but has been removed from Figure 1B for clarity.

The base unit 170 partially surrounds the roller 110. The wiper 180 is rotatably connected to an inner surface of a wall of the base unit 170 via a hinge 172. The wiper 180 is configured to wipe a surface of each of the first and second solar panels as the solar blind 100 is moved between the rolled position and the unrolled position. As the slats and the solar panels are rolled around the roller 110, the slats and solar panels take up more space within the base unit 170. Thus, the wiper 180, which is in contact with the surfaces of the solar panels during this movement from the unrolled position to the rolled position, is forced to rotate towards the inner surface of the wall of the base unit 170 (anti-clockwise about the hinge 172 shown in Figure 1A). Conversely, as the solar blind 100 is moved from the rolled position to the unrolled position, more space inside the base unit 170 becomes available for the wiper 180, so the wiper 180 is able to rotate back towards the position shown in Figure 1A.

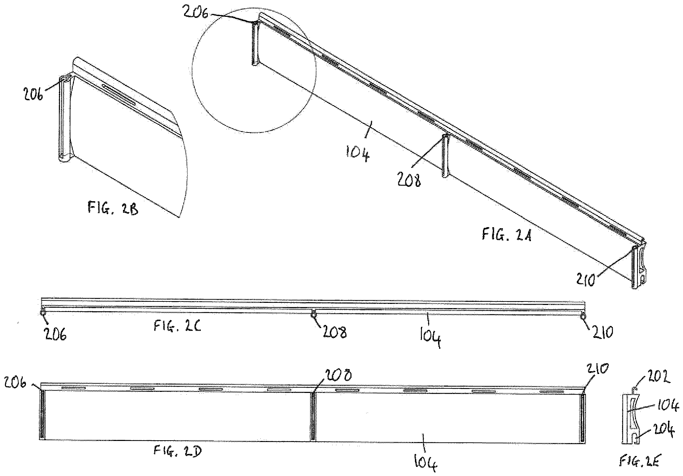

Figures 2A, 2B, 2C, 2D, and 2E show the second slat 104 of the solar blind 100 prior to assembling the solar blind 100. Thus, in Figures 2A - 2E, the solar panels and guide members are not shown.

Whilst Figures 2A, 2B, 2C, 2D, and 2E show a perspective view, a close-up view, a top view, a front view, and a side view, respectively, of the second slat 104. Whilst these figures show the second slat 104, it should be noted that each slat of the plurality of slats, prior to attaching any guide members, is identical to every other slat of the plurality of slats.

The second slat 104 comprises a hook 202 and a slot 204. In use, the hook 202 interacts with a slot of the first slat to hingedly couple the second slat 104 to the first slat. In use, the slot 204 interacts with a hook of another slat to hingedly couple the second slat 104 to the another slat.

The second slat 104 comprises a first chamber 206, a second chamber 208, and a third chamber 210. Each of these chambers is substantially cylindrical in shape, having an open top, a closed base, and a wall extending from the base to the top. The wall defines a slit extending in a direction of the height of the slat.

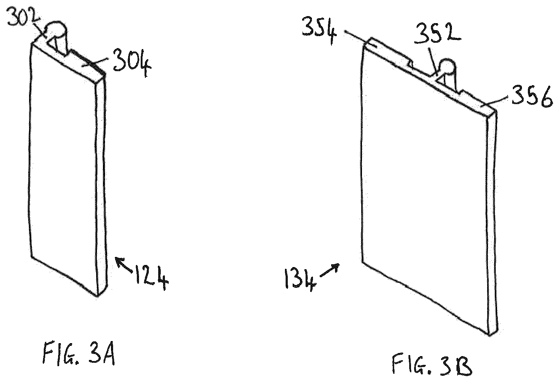

Figures 3A and 3B show perspective views of the first guide member corresponding to the second slat 124 and the second guide member corresponding to the second slat 134, respectively.

The first guide member corresponding to the second slat 124 comprises a first wall 302 and a second wall 304. The second wall 304 extends substantially perpendicularly from the first wall 302. The first guide member corresponding to the second slat 124 therefore has a substantially L-shaped cross-section. A bulbous portion of the first wall 302 is configured to be received by the first chamber of the second slat.

The second guide member corresponding to the second slat 134 comprises a first wall 352, a second wall 354, and a third wall 356. The second wall 354 and the third wall 356 extend in substantially opposite directions, and both extend substantially perpendicularly from the first wall 302. The second guide member corresponding to the second slat 134 therefore has a substantially T-shaped cross-section. A bulbous portion of the first wall 302 is configured to be received by the second chamber of the second slat.

The third guide member corresponding to the second slat is not shown in Figures 3A or 3B, but it should be noted that the third guide member corresponding to the second slat is simply a mirror image of the first guide member corresponding to the second slat 124 shown in Figure 3A.

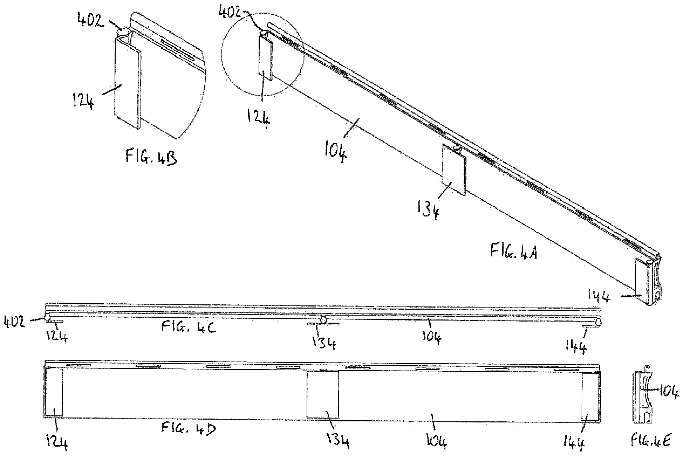

Figures 4A, 4B, 4C, 4D, and 4E show a perspective view, a close-up view, a top view, a front view, and a side view, respectively, of the second slat 104 of the solar blind 100 after the first, second and third guide members corresponding to the second slat 124, 134, 144 have been attached to the second slat 104.

As most clearly seen in Figure 4B, the first chamber 206 receives the bulbous portion of the first wall 302 of the first guide member corresponding to the second slat 124. Specifically, the bulbous portion of the first wall 302 is slid into the open top of the chamber 206 and down the camber 206 to rest on the base of the chamber. Following this, a cap 402 is snap-fitted onto the top of the first chamber 206, thus closing the open top of the first chamber 206 and preventing the first guide member corresponding to the second slat 124 from sliding out of the first chamber 206.

The second chamber 208 similarly receives the first wall 352 of the second guide member corresponding to the second slat 134, and the third chamber 210 similarly receives the first wall of the third guide member corresponding to the second slat 144, and caps are also placed on the second chamber 208 and the third chamber 210.

By reversing the above actions, one can detach the guide members from their corresponding chambers, for example in order to disassemble the solar blind 100. Thus, each guide member is attachable to, and detachable from, its corresponding slat.

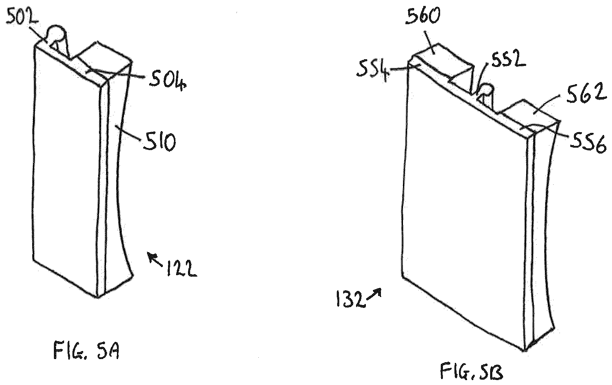

Figures 5A and 5B show perspective views of the first guide member corresponding to the first slat 122 and the second guide member corresponding to the first slat 132, respectively.

The first guide member corresponding to the first slat 122 comprises a first wall 502 and a second wall 504. The second wall 504 extends substantially perpendicularly from the first wall 502. The first and second walls of the first guide member corresponding to the first slat 122 together have a substantially L-shaped cross-section. A bulbous portion of the first wall 502 is configured to be received by a first chamber of the first slat.

The first guide member corresponding to the first slat 122 comprises a first urging means 510. The first urging means is located on an inner surface of the second wall 504. In use, a first portion of the first solar panel 106 is located between the first urging means 510 and the first slat 102. In use, the first urging means 510 is configured to urge the first portion of the first solar panel 106 towards the first slat 102.

The first guide member corresponding to the first slat 122 defines a space for accommodating wiring for the first solar panel 106. Specifically, an inner surface of the first wall 502 and an inner surface of the second wall 504 define a space for accommodating wiring for the first solar panel 106. It should be understood that all of the first guide members in this embodiment similarly define a space for accommodating wiring for the first solar panel 106. Thus, in use, wiring for the first solar panel 106 may be accommodated by the first guide 120. The wiring may electrically connect the first solar panel 106 to the roller 110, or the motor, or to an electrical storage unit.

The second guide member corresponding to the first slat 132 comprises a first wall 552, a second wall 554, and a third wall 556. The second wall 554 and the third wall 556 extend in substantially opposite directions, and both extend substantially perpendicularly from the first wall 502. The first, second and third walls of the second guide member corresponding to the first slat 132 together have has a substantially T-shaped cross-section. A bulbous portion of the first wall 502 is configured to be received by a second chamber of the second slat.

The second guide member corresponding to the first slat 132 comprises a second urging means 560 and a third urging means 562. The second urging means 560 is located on an inner surface of the second wall 554. The third urging means 562 is located an inner surface of on the third wall 554. In use, a second portion of the first solar panel 106 is located between the second urging means 560 and the first slat 102. In use, the second urging means 560 is configured to urge the second portion of the first solar panel 106 towards the first slat 102. In use, a first portion of the second solar panel 108 is located between the third urging means 562 and the first slat 102. In use, the third urging means 562 is configured to urge the first portion of the second solar panel 108 towards the first slat 102.

The third guide member corresponding to the first slat is not shown in Figures 5A or 5B, but it should be noted that the third guide member corresponding to the first slat is simply a mirror image of the first guide member corresponding to the first slat 122 shown in Figure 5A.

In this embodiment, the first, second, and third urging means 510, 560, 562, and a fourth urging means of the third guide member corresponding to the first slat, are all formed from a foam material. The foam material is elastically deformable and is elastically compressed when the guide member is attached to its corresponding slat. For example, the first urging means 510 is compressed as the first guide member corresponding to the first slat 122 is attached to the first slat 102. Specifically, the first urging means 510 is compressed between the second wall 504 of the first guide member corresponding to the first slat 122 and the first solar panel 106 which is attached to the first slat 102. Thus, under this compression, the first urging means 510 urges the first solar panel 106 towards the first slat 102.

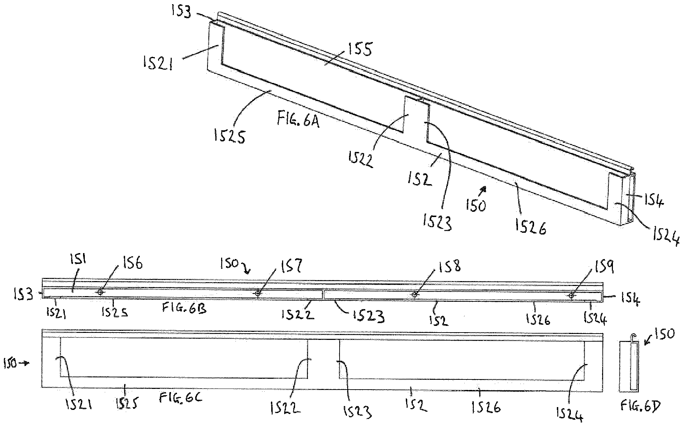

Figures 6A, 6B, 6C, and 6D show a perspective view, top view, front view and side view of the casing 150, respectively.

The casing 150 comprises a base 151. The casing 150 comprises a front wall 152, a first side wall 153, and a second side wall 154, and a back wall 155, each extending substantially perpendicularly from the base 151. In use, a hook of the casing 150 hingedly couples the casing 150 to a slot of a final slat of the plurality of slats.

In use, a portion of the first solar panel 106 hangs freely in a first interior volume defined by the casing 150, and a portion of the second solar panel 106 hangs freely in a second interior volume defined by the casing 150.

In use, a first portion 1521 of the front wall 152 extends over a portion of the first edge of the first solar panel 106, a second portion 1522 of the front wall 152 extends over a portion of the second edge of the first solar panel 106, a third portion 1523 of the front wall 152 extends over a portion of the first edge of the second solar panel 108, and a fourth portion 1524 of the front wall 152 extends over a portion of the second edge of the second solar panel 108. These first, second, third and fourth portions of the front wall 152 limit movement of the first and second edges of each of the first and second solar panels. In this way, these portions of the front wall 152 act in a similar manner to guide members of the slats.

In use, a fifth portion 1525 of the front wall 152 extends over a portion of the third edge of the first solar panel 106, and a sixth portion 1526 of the front wall 152 extends over a portion of the third edge of the second solar panel 108. These fifth and sixth portions of the front wall 152 limit movement of the solar panels along their widths.

The casing 150 comprises four drainage holes 156, 157, 158, 159. The drainage holes are located in the base 151 of the casing 150. In this embodiment, the drainage holes 156, 157, 158, 159 are apertures having substantially circular cross-sections.

Figure 7 shows a perspective view of the solar blind 100 in a rolled position. In this position, at least some of the slats and the first solar panel 106 and the second solar panel 108 are rolled around the roller 110. The solar blind may be capable of moving beyond the rolled position of Figure 7 to a rolled position in which all of the slats are rolled around the roller 110. This may be referred to as a fully rolled position.

The solar blind 100 is provided to a user as a kit of parts for assembling into the solar blind 100. The kit of parts comprises the individual slats, including the first slat 102 and the second slat 104, the first solar panel 106 and the second solar panel 108, each solar panel having an adhesive strip located across its width on its back face for coupling each solar panel to the first slat 102, the roller 110 with an integrated motor, the first, second and third guides comprising the first, second and third guide members, the casing 150, and the base unit 170 with the wiper 180 already connected.

After receiving the kit of parts, a user may assemble the solar blind 100 by following these ordered steps:
A. Couple the slats to each other, the roller 110, and the casing 150;
B. Locate the third edge of the first solar panel 106 and the third edge of the second solar panel 108 in the first and second interior volumes defined by the casing 150;
C. Adhere the first solar panel 106 and the second solar panel 108 to the first slat 102, such that the solar panels extend over the first slat 102 and over the second slat 104;
D. Attach the guide members to their corresponding slats, ensuring that any wiring for the solar panel is electrically connected to the solar panel and that, where possible, the wiring is accommodated by the spaces defined by the guide members.

Other methods of assembly are possible. For example, step C may be performed before step B.

Figures 8A and 8B show perspective views of guide members having alternative structures to those shown in Figures 3A and 3B in respect of the first embodiment of the invention. The guide members of Figures 8A and 8B are therefore intended for use in a solar blind according to a second embodiment of the invention.

In Figure 8A a first guide member 800 is shown. The first guide member 800 is for use on a second slat, such as the second slat 124 described above in respect of the first embodiment of the invention. The first guide member 800 comprises a first wall 802 and a second wall 804. The second wall 804 extends substantially perpendicularly from the first wall 802. The first guide member 800 therefore has a substantially L-shaped cross-section.

The second wall 804 of the first guide member 800 in Figure 8A has a substantially convex outer surface 804A. This contrasts with the second wall 304 of the guide member shown in Figure 3A, which has a substantially flat outer surface. Similarly, the second guide member 801 shown in Figure 8B is substantially the same as the second guide member of Figure 3B. However, the second guide member 801 shown in Figure 8B comprises a second wall 854 and a third wall 856, each of which has a substantially convex outer surface 854A, 856A. This contrasts with the second and third walls 354, 356 of the guide member shown in Figure 3A, which has a substantially flat outer surface. Such curved outer surface of the guide members shown in Figures 8A and 8B may advantageously allow the slats of the solar blind to be more tightly wound around the roller when the solar blind is in a rolled position.

## Claims

1. A solar blind comprising:
a plurality of slats, the plurality of slats including a first slat and a second slat; and
a solar panel, the solar panel being coupled to the first slat and extending over at least a portion of the first slat and over at least a portion of the second slat.

2. A solar blind according to claim 1, the solar blind comprising a roller and being moveable between a rolled position, in which at least two slats of the plurality of slats are rolled around the roller, and an unrolled position, in which the at least two slats of the plurality of slats extend away from the roller.

3. A solar blind according to claim 2, wherein, in the rolled position, at least a section of the solar panel is rolled around the roller and, in the unrolled position, at least the section of the solar panel extends away from the roller.

4. A solar blind according to any preceding claim, wherein the first slat is hingedly coupled to the second slat.

5. A solar blind according to any preceding claim, the solar blind comprising a first guide configured to limit movement of a first edge of the solar panel.

6. A solar blind according to claim 5, wherein the first guide comprises one or more first guide members, each first guide member corresponding to a slat of the plurality of slats.

7. A solar blind according to claim 6, wherein the first guide comprises a first guide member corresponding to the first slat, and wherein a first portion of the first edge of the solar panel is located between the first slat and the first guide member corresponding to the first slat.

8. A solar blind according to claim 7, wherein the first guide member corresponding to the first slat comprises an urging means configured to urge the first portion of the solar panel towards the first slat.

9. A solar blind according to claim 7 or 8, wherein the first guide member corresponding to the first slat is attachable to, and detachable from, the first slat.

10. A solar blind according to any of claims 7 to 9, wherein the first guide member corresponding to the first slat extends away from the first slat and over the first edge of the solar panel.

11. A solar blind according to any of claims 7 to 10, wherein the first guide member corresponding to the first slat defines a space for accommodating wiring for the solar panel.

12. A solar blind according to any preceding claim, the solar blind comprising a casing configured to limit movement of a third edge of the solar panel.

13. A solar blind according to any preceding claim, wherein the solar blind comprises a wiper for wiping a surface of the solar panel.

14. A method of assembling a solar blind, the method comprising:
providing a plurality of slats, the plurality of slats including a first slat and a second slat; and
coupling a solar panel to the first slat such that the solar panel extends over at least a portion of the first slat and over at least a portion of the second slat.

15. A kit of parts for assembling into a solar blind, the kit comprising:
a plurality of slats, the plurality of slats including a first slat and a second slat;
a solar panel; and
a coupling means for coupling the solar panel to the first slat such that the solar panel extends over at least a portion of the first slat and over at least a portion of the second slat.
